Europäisches Patentamt

European Patent Office

Office européen des brevets

(11) Veröffentlichungsnummer : **0 120 468**
**B1**

(12) **EUROPÄISCHE PATENTSCHRIFT**

(45) Veröffentlichungstag der Patentschrift :
20.08.86

(51) Int. Cl.⁴ : **G 01 N   3/36**

(21) Anmeldenummer : **84103158.6**

(22) Anmeldetag : **22.03.84**

(54) **Hydraulikzylinder-Kolben-Einheit mit änderbarem Wirkdurchmesser für Schwingfestigkeits-Untersuchung von Probestücken.**

(30) Priorität : 23.03.83 DE 3310508

(43) Veröffentlichungstag der Anmeldung :
03.10.84 Patentblatt 84/40

(45) Bekanntmachung des Hinweises auf die Patenterteilung : 20.08.86 Patentblatt 86/34

(84) Benannte Vertragsstaaten :
**AT BE CH DE FR GB IT LI NL SE**

(56) Entgegenhaltungen :
**CH-A-   397 432**
**DE-A- 2 230 470**
**DE-A- 2 943 332**
**DE-A- 2 943 640**
**DE-A- 2 945 571**
**DE-B- 1 221 467**
**FR-A- 2 085 943**

(73) Patentinhaber : **Fraunhofer-Gesellschaft zur Förde-**
**rung der angewandten Forschung e.V.**
**Leonrodstrasse 54**
**D-8000 München 19 (DE)**

(72) Erfinder : **Lipp, Wilhelm, Obering.**
**Kollwitzweg 4**
**D-6100 Darmstadt (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine neuartige Hydraulik-Zylinder-Kolben-Einheit mit änderbarem Wirkdurchmesser für die Schwingfestigkeits-Untersuchung von Probestücken, nämlich von Probestäben oder Bauteilen.

Solche handelsüblichen Einheiten haben eine nur für einen vorgegebenen begrenzten Lastbereich ausgelegte Steuereinheit. Bei einer wesentlich anderen Probestückgröße muß der Versuchsstand daher jedesmal umgerüstet werden, was Zeit und Geld kostet. Bei Verwendung eines unnötig großen Hydraulikzylinders wird einerseits die Steuerung ungenau und andererseits läßt die von der Pumpe zu fördernde Steuerölmenge keine optimale Prüffrequenz zu, wodurch sowohl die Prüfzeit wie auch der Energieaufwand nachteilig beeinflußt werden.

Erfindungsaufgabe ist es, eine neuartige solche Hydraulikzylinder-Kolben-Einheit aufzuzeigen, bei der ohne nennenswerte Umrüstzeit die jeweils erforderlichen Prüfkräfte mit optimaler Steuergenauigkeit und Prüffrequenz auf das Probestück eingebracht werden können.

Diese Aufgabe wird — ausgehend von der eingangs geschilderten Einheit — nach den kennzeichnenden Merkmalen des Anspruchs 1 dadurch gelöst, daß der dem Probestück zugewandte Boden des Zylinders auswechselbar ist und entsprechend dem jeweiligen Kolben einen unterschiedlich großen Durchgang aufweist, und daß der Kolben im Zylinder nur durch einen vorzugsweise profilierten Radial-Dichtring aus nachgiebigem Werkstoff und eine gelenkige Verbindung mit dem freien Ende des Probestücks geführt ist. Je nach dem zu untersuchenden Probestück wird also die optimale Kolbengröße mit dem dazugehörenden Zylinderboden verwendet, während der Zylinder selbst ortsfest bestehen bleibt. Es werden demnach keine für den größten Teil der Prüfarbeit unnötig großen Zylinder und Kolben verwendet.

Eine metallische Berührung zwischen Zylinder und Kolben findet dabei nicht statt. Die von der Probeverformung herrührende Schwenkbewegung des Kolbens ist so gering, daß sie der profilierte Dichtring zuläßt. Die Ansprüche 2 und 3 enthalten Vorschläge zur günstigen Ausbildung der Dichtung zwischen Zylinder, Boden und Kolben.

Die gelenkige Verbindung der freien Enden von Kolben und Probestück wird besonders einfach, wenn nach Anspruch 4 zwei in einstellbarem Takt gegeneinanderwirkende Einheiten ortsfest angeordnet sind ; sie besteht nämlich dann aus zwei einfachen Druckstücken, vorzugsweise Kugeln, die in entsprechende Vertiefungen am Kolben- und Probestückende eingreifen. Da die in die Probestücke einzuleitenden Prüfkräfte dabei ausschließlich Druckkräfte sind, entfällt das bei Verwendung einer einzigen Einheit mit wechselnder Zug-, Druck- Belastung erforderliche spielfreie und damit aufwendige umschlossene Gelenk.

Außerdem bewirkt die gelenkige Kolbenführung, daß keine unerwünschten Querkräfte auftreten können. Eine kostenaufwendige hydrostatische Führung des Kolbens, die in handelsüblichen Zylindern únerlässlich ist, entfällt daher.

In der DE-B-23 45 445 ist eine ähnliche Einheit beschrieben, bei der ein Mehrkammerzylinder, der für zwei vorgegebene Laststufen ausgelegt ist, entweder die niedrige oder die hohe Laststufe oder auch beide hintereinander in einer bestimmten zeitlichen Zuordnung aufzubringen gestattet.

In der DE-A-29 43 640 ist dagegen eine Kolben-Zylinder-Einheit beschrieben, bei der zur Vermeidung von Toträumen eine verstellbare Wegbegrenzung vorgesehen ist.

Nach der DE-A-29 45 571 soll sich bei einer hydraulischen Werkstoff-Prüfmaschine der Prüfzylinder bei spielfreier Schwenkbarkeit der jeweiligen Probenform auch unter Belastung anpassen, was durch ballige Ausbildung beider Zylinderdeckel und deren Abstützung in entsprechend kalottenförmigen Lagerdeckeln erreicht wird. In einem Ausfärhungsbeispiel weist eine Prüfmaschine zwei parallel und ortsfest angeordnete Hydraulik-Zylinder-Kolben-Einheiten auf.

Eine Anregung für die neuartige Einheit, die einen leicht durchzuführenden Austausch des dem Probestück zugewandten Zylinderbodens gegen einen anderen mit einem Durchgang für einen Kolben geänderten Durchmessers zuläßt, ohne daß der bereits z. B. in einem Prüfgerüst eingebaute und an die Hydraulikleitung angeschlossene Zylinder ausgetauscht werden muß, ist dem Stand der Technik nicht zu entnehmen ; dies gilt in gleicher Weise für die neuartige, Querkräfte ausschließende Führung und die Verbindung des Kolbens mit dem Probestück. Eine besondere, optimale Wahl des Kolbendurchmessers ist auch deshalb wichtig, weil damit meist bei zufallsartiger Belastungsfolge die Prüffrequenz durch das zu fördernde Ölvolumen bestimmt wird und somit die Prüfzeit und die Prüfkosten wesentlich herabgesetzt werden können.

Die Erfindung wird an Hand der Zeichnung mit mehreren Ausführungsbeispielen erläutert ; dabei zeigen :

Figur 1 die Gesamtanordnung mit zwei gegeneinanderwirkenden Hydraulik-Zylinder-Kolben-Einheiten,

Figur 2 eine Einheit mit eingesetztem größtmöglichen Kolben,

Figur 3 eine Einheit mit kleinstem Kolben.

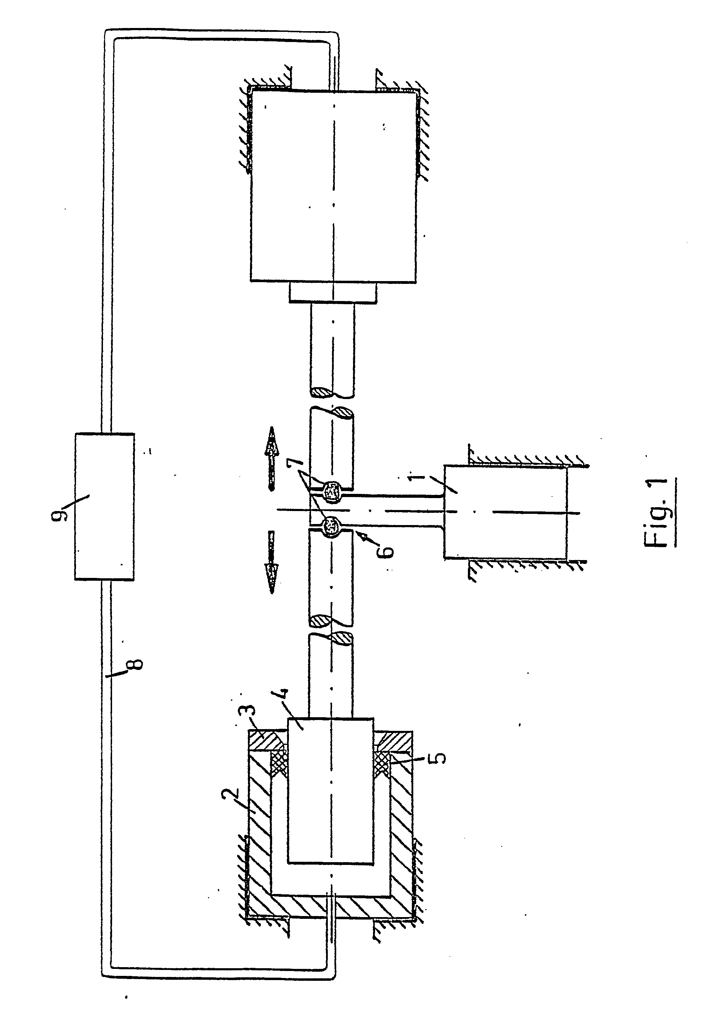

Nach Fig. 1 sind zwei Hydraulik-Zylinder-Kolben-Einheiten (2, 4) gegeneinanderwirkend ortsfest angebracht ; sie werden über je eine Öldruck-Leitung 8 von einem Servoventil 9 im gewünschten Takt gesteuert. Ein Probestück 1 ist am oberen freien Ende über eine gelenkige Verbindung 6 mit den freien Enden verbunden, und zwar handelt es sich um jeweils eine Kugel 7, die in je eine Vertiefung am Kolben- und Probestückende eingreift. Die Kolben sind nur durch diese gelenkige Verbindung und durch einen profilierten Dichtring 5 aus nachgiebigem Werkstoff im Zylinder geführt.

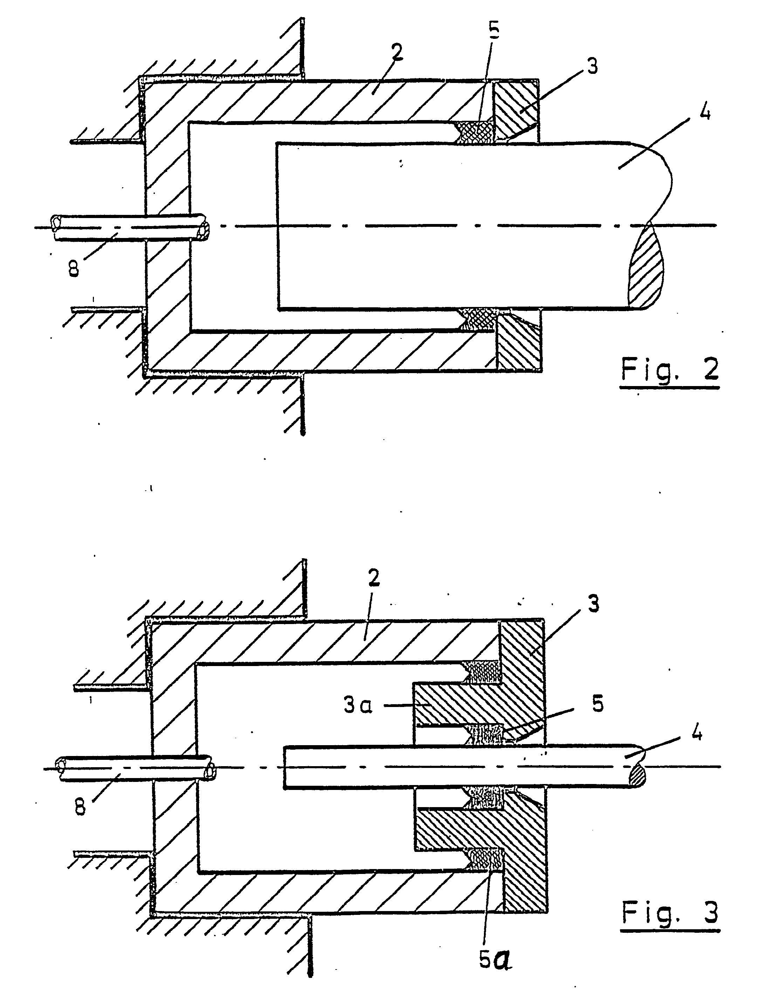

In Fig. 2 ist der in den Zylinder 2 größtmöglich einsetzbare Kolben 4 dargestellt; zwischen diesem und der Innenwandung des Zylinders ist jener Radial-Dichtring 5 eingesetzt, der vom Zylinderboden 3 axial gehalten wird.

Bei kleineren Kolben 4 wird nach Fig. 3 ein Boden 3 mit nach innen weisendem zylindrischen Ansatz 3a verwendet, der den Dichtring 5 trägt. Die Dichtung zwischen Zylinder und Boden geschieht durch den einen weiteren profilierten Radial-Dichtring 5a aus nachgiebigem Werkstoff.

### Patentansprüche

1. Hydraulik-Zylinder-Kolben-Einheit mit änderbarem Wirkdurchmesser für die Schwingfestigkeits-Untersuchung von Probestücken (1), dadurch gekennzeichnet, daß der dem Probestück (1) zugewandte Boden (3) des Zylinders (2) auswechselbar ist und entsprechend dem jeweiligen Kolben (4) einen unterschiedlich großen Durchgang aufweist, und daß der Kolben (4) im Zylinder (2) nur durch einen vorzugsweise profilierten Radial-Dichtring (5) aus nachgiebigem Werkstoff und eine gelenkige Verbindung (6) mit dem freien Ende des Probestücks (1) geführt ist.

2. Einheit nach Anspruch 1, dadurch gekennzeichnet, daß der Boden (3) einen zylindrischen Ansatz (3a) aufweist, der den Dichtring (5) trägt.

3. Einheit nach Anspruch 2, dadurch gekennzeichnet, daß zwischen dem zylindrischen Ansatz (3a) und der Innenwand des Zylinders (2) ein weiterer profilierter Radial-Dichtring (5a) angebracht ist.

4. Vorrichtung für die Schwingfestigkeits-Untersuchung von Probestücken (1) mit zwei ortsfest angeordneten Hydraulik-Zylinder-Kolben-Einheiten (2-5), dadurch gekennzeichnet, daß Einheiten nach einem der Ansprüche 1 bis 3 paarweise und in einstellbarem Takt gegeneinanderwirkend angeordnet sind und daß die gelenkige Verbindung (6) mit dem freien Ende des Probestücks (1) aus zwei einfachen Druckstücken (7), vorzugsweise Kugeln, besteht, die in entsprechende Vertiefungen am Kolben- und Probestückende eingreifen.

### Claims

1. Hydraulic cylinder-piston unit with a variable effective diameter for testing samples (1) in view of alternating stress, characterized in that the bottom (3) of the cylinder (2), which faces the sample (1), is exchangeable and has a passage of different diameters in correspondence to the respective piston (4), and that the piston (4) is guided in the cylinder (2) only by a preferably profiled radial sealing ring (5) of resilient material and an articulated connection (6) to the free end of the sample (1).

2. Unit according to Claim 1, characterized in that the bottom (3) comprises a cylindrical extension piece (3a) carrying said sealing ring (5).

3. Unit according to Claim 2, characterized in that another profiled radial sealing ring (5a) is provided between the cylindrical extension piece (3a) and the internal wall of the cylinder (2).

4. Device for the fatigue strength test of samples (1), comprising two stationary hydraulic cylinder-piston units (2-5), characterized in that units according to any of Claims 1 to 3 are arranged in pairs for counteraction in an adjustable cycle, and that the articulated connection (6) to the free end of the sample (1) is composed of two simple pressure elements (7), preferably balls engaging in matching recesses at the ends of the piston and the sample.

### Revendications

1. Unité de cylindre et piston hydraulique à diamètre actif variable pour des essais de la résistance des pièces à essayer (1) aux efforts alternées, caractérisée en ce que le fond (3) du cylindre (2) tourné vers la pièce à essayer (1) soit remplaçable et ait un passage de diamètre différent en correspondance avec le piston (4) respectif, et que le piston (4) soit guidé au dedans du cylindre (2) seulement par une bague radiale d'étanchéité (5) d'un matériel souple, préférablement profilée, et par un assemblage articulé (6) à l'extrémité libre de la pièce (1) à essayer.

2. Unité selon la revendication 1, caractérisée en ce que le fond (3) comprend une saillie cylindrique (3a) portant ladite bague d'étanchéité.

3. Unité selon la revendication 2, caractérisée en ce qu'une autre bague radiale d'étanchéité (5a) profilée soit disposée entre ladite saillie (3a) et la paroi interne du cylindre (2).

4. Dispositif pour des essais de la résistance des pièces à essayer (1), comprenant des unités de cylindre et piston hydraulique stationnaires (2-5), caractérisé en ce que des unités selon quelconque des revendications 1 à 3, soient disposées en paires et pour une opération antagoniste à un temps réglable, et que l'assemblage (6) articulé à l'extrémité libre de la pièce à essayer (1) soit composé des deux membres de pression (7) simples, préférablement des billes s'engrenantes dans des cavités aux extrémités du piston et de la pièce à essayer.

Fig. 1

Fig. 2

Fig. 3